# EUROPÄISCHE PATENTSCHRIFT

(11) **EP 2 987 994 B1**
(45) Veröffentlichungstag und Bekanntmachung des Hinweises auf die Patenterteilung: **10.01.2018**
(21) Anmeldenummer: 15181899.4
(22) Anmeldetag: 21.08.2015
(51) Int. Cl.: F02M 26/17, F02M 26/28, F02M 26/32, F02M 26/51, F02M 26/73, F02B 29/04, F02D 9/10, F02M 35/10, F02M 35/112

(54) **MOTORZULUFTVERTEILEREINHEIT MIT EINEM GEHÄUSE UND EINEM STELLGLIED**
MOTOR INLET AIR DISTRIBUTOR UNIT WITH A HOUSING AND AN ACTUATOR
UNITE DE REPARTITION D'AIR FRAIS DE MOTEUR DOTE D'UN CARTER ET D'UN ACTIONNEUR

(30) Priorität: 22.08.2014 DE 102014112016
(43) Veröffentlichungstag der Anmeldung: 24.02.2016
(73) Patentinhaber: Handtmann Systemtechnik GmbH & Co. KG, 88400 Biberach/Riß (DE)
(72) Erfinder: Frömel, Roland, 89269 Vöhringen (DE)
(74) Vertreter: Otten, Roth, Dobler & Partner mbB Patentanwälte

(56) Entgegenhaltungen:
- EP-A2- 0 908 615
- WO-A1-2012/130514
- DE-A1-102004 013 309
- GB-A- 2 237 066
- US-A- 5 666 930

## Beschreibung

Die Erfindung betrifft eine Motorzuluftverteilereinheit zum Verteilen von Zuluft auf wenigstens zwei Zylinder eines Motors nach dem Oberbegriff des Anspruchs 1.

### Stand der Technik

Moderne Verbrennungskraftmaschinen wie Diesel- oder Ottomotoren weisen zahlreiche Versorgungs- bzw. Peripheriekomponenten auf, um v.a. auch die Verbrennungsluft bzw. Zuluft des Motors aufzubereiten bzw. um einen geringen Kraftstoffverbrauch sowie hohe Anforderungen an die Abgaswerte zu verwirklichen.

So sind moderne Brennkraftmaschinen vielfach mittels einem Verdichter bzw. Turbolader oder dergleichen aufgeladen. Das heißt, dass das ausströmende Abgas die Zuluft bzw. Verbrennungsluft auflädt/verdichtet und über das sogenannte "Saugrohr" entsprechend verdichtet dem Motor bzw. den Zylindern für den sogenannten Ansaugtakt zur Verfügung stellt (vgl. z.B. WO 2012/130514 A1).

Moderne Brennkraftmaschinen weisen vielfach auch einen sogenannten Hoch-Temperatur-Kühlmittelkreislauf und einen sogenannten Niedertemperatur-Kühlmittelkreislauf auf. Das heißt, dass hierbei zwei separate Kühlmittel- bzw. Kühlwasserkreisläufe vorgesehen sind, wobei ein Kreislauf ein Kühlwasser mit einer Temperatur von ca. 90°C und der andere Kühlflüssigkeit bzw. Kühlwasser mit einer Temperatur von ca. 40°C aufweist. Die beiden unterschiedlichen Temperaturniveaus sind zur Kühlung von unterschiedlichen Komponenten moderner Brennkraftmaschinen vorgesehen.

So wird z.B. eine Regelklappe, die für die Einstellung des Druckverhältnisses für die Abgasrückführung bzw. für die Reduzierung der Ladeluftströmung bzw. der Zuluft vor allem beim Motor abschalten vorgesehen ist, über den sogenannten Hochtemperaturkühlmittelkreislauf, das heißt mit ca. 90°C gekühlt. Dagegen wird ein sogenannter Ladeluftkühler, der bei der direkten Ladeluftkühlung mittels Fahrtwind bzw. Luft gekühlt wird und bei der sogenannten "indirekten Ladeluftkühlung" im sogenannten "Saugrohr" integriert ist, mit dem Niedertemperaturkühlmittel, das heißt mit ca. 40°C kaltem Kühlwasser gekühlt.

Darüber hinaus wird bei der Abgasrückführung ein sogenanntes Abgasrückführventil zur Regelung des Abgasstromes für die Rückführung zur Ladeluft bzw. zur Vermischung mit der Zuluft ebenfalls gekühlt.

Für die Kühlung diverser Komponenten eines Verbrennungsmotors sind somit zahlreiche Verbindungsleitungen zwischen den einzelnen Komponenten und zur Realisierung eines geschlossenen Kühlkreislaufs bzw. der zwei separaten Kühlkreisläufe notwendig. Entsprechende Verbindungen werden bislang mittels Kunststoffschläuchen und entsprechenden Schlauchschellen bzw. Rohren etc. realisiert.

Die Praxis zeigt jedoch, dass die bisherige Technologie auf Dauer störanfällig ist bzw. zu Undichtigkeiten bzw. Leckagen des Kühlwassers führen kann.

Darüber hinaus ist die Montage entsprechender Schläuche, Rohre, Rohrschellen etc. sehr aufwendig und somit auch mit entsprechenden Kosten sowohl bei der Herstellung der Motoren/Fahrzeuge als auch bei der Reparatur verbunden.

### Aufgabe und Vorteile der Erfindung

Aufgabe der Erfindung ist es demgegenüber, eine Motorzuluft-Verteilereinheit zum Verteilen von Zuluft auf wenigstens zwei Zylinder eines Motors vorzuschlagen, wobei der Aufwand verringert wird.

Diese Aufgabe wird, ausgehend von einer Motorzuluftverteilereinheit der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Motorzuluftverteilereinheit dadurch aus, dass in dem Hohlkörper wenigstens ein Kühlwasserzulauf und ein Kühlwasserablauf zum Zuführen und Abführen von Kühlwasser zu/von einer Stellgliedkühlung vorgesehen sind.

Gemäß der Erfindung ist wenigstens eine Zuluft-Kühleinheit, d.h. ein Ladeluftkühler, zum Kühlen der Zuluft vorgesehen und weist der Hohlkörper bzw. das Gehäuse/die Gehäusewand wenigstens einen Zuluft-Kühlzulauf und einen Zuluft-Kühlablauf zum Zuführen und Abführen von Kühlwasser zur Zuluft-Kühleinheit auf, sodass die Zuluft-Kühleinheit mit Kühlwasser kühlbar ist.

Mit Hilfe der Erfindung wird ermöglicht, dass vor allem eine oder mehrere während dem Betrieb einer Verbrennungskraftmaschine bzw. eines Motors zu kühlenden Komponenten keine eigenen bzw. direkten Zuläufe und/oder Abläufe für Kühlwasser benötigen. Vielmehr kann die Motorzuluftverteilereinheit bzw. das sogenannte "Saugrohr" des Motors für den Anschluss von bzw. die Versorgung mit Kühlwasser, insbesondere sowohl für das sogenannte Hochtemperaturkühlmittel und/oder für das sogenannte Niedertemperaturkühlmittel, verwendet werden. Dementsprechend verringert sich der Aufwand zur Herstellung entsprechender Verbindungen dieser Komponenten des Motors, was zudem zu einer Verringerung der Montage- bzw. Herstellungskosten führt.

Auch kann auf Kunststoffschläuche bzw. Metallrohre oder dergleichen einschließlich entsprechender Schlauchverbindungen bzw. Rohrverbindungen verzichtet bzw. deren Anzahl reduziert werden, sodass gemäß der Erfindung die Anfälligkeit bezüglich Undichtigkeiten bzw. Störungen reduziert oder sogar vollständig beseitigt werden kann. Dies erhöht die Betriebssicherheit des Motors bzw. der Brennkraftmaschine auch über längere Zeiträume hinaus.

Vorzugsweise ist der Hohlkörper als Gehäuse der Motorzuluftverteilereinheit ausgebildet. Dementsprechend ist der Hohlkörper bzw. das Gehäuse als Hülle der Luftleitung und Luftverteilung zwischen der Zuluft-Zuströmöffnung und den mehreren Zuluft-Abströmöffnungen ausgebildet, insbesondere von 3, 4, 6, 8 oder 12 Zuluft-Abstromöffnungen für eine entsprechende Anzahl an Zylindern des Motors. So kann der Hohlkörper bzw. das Gehäuse beispielsweise Befestigungspunkte bzw. Befestigungsmittel für das Stellglied, den Zylinderkopf, diverse Sensoren, diverse elektrische Anschlüsse oder dergleichen aufweisen.

Beispielsweise ist die Verteilereinheit gemäß der Erfindung als einstückige Einheit mit dem Hohlkörper ausgebildet, wobei der Hohlkörper eine (einzige) Zuluft-Zuströmöffnung und die wenigstens zwei Zuluft-Ausströmöffnungen aufweist. Alternativ kann auch eine Verteilereinheit gemäß der Erfindung den Hohlkörper mit der (einzigen) Zuluft-Zuströmöffnung und einer (einzigen) Zuluft-Ausströmöffnung aufweisen und zudem ein in Strömungsrichtung dem Hohlkörper bzw. Gehäuse nachgelagertes bzw. dahinter/nachfolgend angeordnetes/fixiertes Verteilerelement aufweisen, wobei das (separat herstellbare und de-/montierbare) Verteilerelement die wenigstens zwei Zuluft-Ausströmöffnungen für zu den Zylindern ausströmende Zuluft aufweist. Das bedeutet, dass bei dieser besonderen Variante die Verteilereinheit im Sinn der Erfindung wenigstens zweistückig ausgebildet ist, nämlich einerseits den Hohlkörper bzw. das Gehäuse mit der erfindungsgemäßen Kühlwasserkühlung und andererseits das Verteilerelement zur Verteilung der Zuluft auf die jeweils vorhandenen zwei oder mehr Zylinder des Motors umfasst. Vorzugsweise ist das Verteilerelement als sog. "Zylinderkopf" des Motors ausgebildet.

Vorteilhafterweise umfasst eine Gehäusewand bzw. eine Wand des Hohlkörpers den Kühlwasserzulauf und den Kühlwasserablauf zum Zuführen und Abführen von Kühlwasser. Beispielsweise ist der Hohlkörper bzw. das Gehäuse aus Metall, insbesondere Metallguss bzw. Aluminiumguss, oder aus Kunststoff hergestellt.

In einer bevorzugten Variante der Erfindung ist der Hohlkörper bzw. das Gehäuse/die Gehäusewand wenigstens teilweise als Kühlwasserkanal für das Kühlwasser ausgebildet, insbesondere als Stellglied-Kühlwasserkanal ausgebildet, wobei zumindest teilweise der Kühlwasserkanal bzw. Stellglied-Kühlwasserkanal im Wesentlichen entlang einer Ober-/Außenfläche des Hohlkörpers bzw. des Gehäuses ausgerichtet ist. Vorzugsweise erstreckt sich ein entsprechender Kühlwasserkanal nicht (nur) quer zur Wand durch die Gehäusewand bzw. den Hohlkörper hindurch, sondern erstreckt sich vielmehr zum Großteil bzw. im Wesentlichen entlang des Hohlkörpers bzw. der Wand des Hohlkörpers/Gehäusewand, d.h. längs zur Außen-/Oberfläche des Hohlkörpers bzw. der Gehäusewand, insbesondere parallel zur Außenfläche.

So wird in vorteilhafter Weise erreicht, dass die Motorzuluftverteilereinheit nicht nur zur Durchströmung bzw. Verteilung von Zuluft ausgebildet ist, sondern vielmehr zusätzlich auch noch zur Durchströmung und ggf. in vorteilhafter Weise zur Verteilung von Kühlwasser in wenigstens einem separaten Kühlwasser-Hohlraum, der sich im Hohlkörper/Gehäuse zusätzlich zum bzw. neben einem Zuluft-Hohlraum für die Zuluft befindet. Dementsprechend kann die Wand des Hohlkörpers bzw. die Gehäusewand des sogenannten "Saugrohrs" als Kühlwasserkanal gemäß der Erfindung ausgebildet bzw. verwendet werden. Demgemäß ist der Kühlwasserkanal als in den Hohlkörper eingeformter und/oder gegossener Kühlwasserkanal realisierbar.

Der erfindungsgemäße Kühlwasserkanal der Motorzuluftverteilereinheit erstreckt sich im Wesentlichen zwischen dem Kühlwasserzulauf und dem Kühlwasserablauf und kann sich beispielsweise in nicht geradliniger Weise entlang der (gebogenen) Gehäusewand erstrecken, insbesondere mehrere Zentimeter oder Dezimeter lang.

Mit der Ausbildung des Kühlwasserkanals als Stellglied-Kühlwasserkanal kann eine separate Verbindung des Stellgliedes zum Kühlkreislauf, insbesondere zum sogenannten Hochtemperaturkreislauf mit ca. 90°C entfallen. Das heißt, das Stellglied bzw. die sogenannte "Regelklappe" kann gemäß der Erfindung indirekt über den Hohlkörper in den jeweiligen Kühlkreislauf eingebunden werden. Direkte Anschlüsse des Stellglieds an Schläuche des Kühlkreislaufes können in vorteilhafter Weise entfallen. Ein entsprechender Montageaufwand für die Montage derartiger Schläuche sowie der Schlauchschellen als auch die hiermit verbundene Gefahr von Undichtigkeiten entsprechender Schlauchverbindungen wird gemäß der Erfindung vermieden.

Vorzugsweise umfasst der Kühlwasserkanal, insbesondere Stellglied-Kühlwasserkanal, eine Trennwand zwischen dem Innenraum des Hohlkörpers bzw. eines Zuluft-Hohlraumes für die Zuluft, wobei die Trennwand eine Wärmetauscherfläche umfasst bzw. als Wärmetauscherwand zum Wärmetausch bzw. zum Kühlen der Zuluft mit Hilfe des Kühlwassers des Kühlwasserkanals ausgebildet ist. Hiermit kann eine vorteilhafte Kühlung der Zuluft innerhalb der Motorzuluftverteilereinheit und gegebenenfalls ohne weitere Wärmetauscher bzw. Kühler realisiert werden. So können nicht nur das Stellglied bzw. die sogenannte "Regelklappe", sondern auch eine Abgasrückführung bzw. Komponenten der Abgasrückführung beispielsweise über einen Wärmetausch mittels des Kühlwasserkanals gekühlt werden.

Vorzugsweise ist der Stellglied-Kühlwasserkanal wenigstens teilweise an der Zuluft-Zuströmöffnung angeordnet. Hiermit wird gewährleistet, dass das Stellglied, das im Betrieb an der Zuluft-Zuströmöffnung angeordnet/fixiert ist, in vorteilhafter Weise mit Hilfe des Stellglied-Kühlwasserkanals bzw. des Kühlwassers gekühlt wird. Beispielsweise kann das Stellglied indirekt über den Stellglied-Kühlwasserkanal gekühlt werden, das heißt vorzugsweise über einen Wärmetauscher bzw. eine Wärmetauscher-Trennwand, wobei sich in vorteilhafter Weise der Hohlkörper bzw. das Gehäuse der Motorzuluftverteilereinheit wenigstens teilweise um das Stellglied bzw. die sogenannte "Regelklappe" erstreckt. Hiermit wird eine großflächige Wärmetauscherfläche bzw. eine vorteilhafte indirekte Kühlung des Stellglieds über den Hohlkörper bzw. das/die Gehäuse/Gehäusewand realisiert.

In einer besonderen Weiterbildung der Erfindung weist ein Gehäuse des Stellglieds bzw. der sogenannten "Regelklappe" einen Kühlkanal auf, der eine Einströmöffnung und eine Ausströmöffnung aufweist. Vorteilhafterweise ist eine ebene Stellglied-Gehäusefläche vorgesehen, die die Einströmöffnung und die Ausströmöffnung für das Kühlwasser aufweist. Hiermit ist eine vorteilhafte Übergabe des Kühlwassers vom Hohlkörper zur und von dem Gehäuse des Stellglieds realisierbar. Vorzugsweise ist eine ebene Stellglied-Hohlkörperfläche vorgesehen. Zudem ist eine vorteilhafte Flächendichtung zwischen dem Hohlkörper und dem Stellglied, insbesondere an der ebenen Gehäuse-/Hohlkörperfläche vorgesehen. Hiermit wird erreicht, dass durch eine vorteilhafte Montage/Fixierung des Stellglieds, beispielsweise mittels Schraubverbindungen oder dergleichen, und einem Dichtelement, durch die Montage des Stellglieds am Hohlkörper eine vorteilhafte Abdichtung und Übergabe des Kühlmittels realisierbar ist. Eine derartige Übergabe bzw. Abdichtung mittels ebener Dichtflächen weist eine hohe Zuverlässigkeit bzw. lange Lebensdauer ohne Leckage auf.

Schlauch- oder Rohrverbindungen des Stellglieds wie dies bislang beim Stand der Technik realisiert wurde, sind somit nicht mehr notwendig bzw. werden vollständig vermieden, was die Betriebssicherheit und die Herstellung bzw. die Montagekosten etc. reduziert.

Dementsprechend wird das Kühlwasser für das Stellglied nunmehr indirekt dem Stellglied zugeführt, nämlich über den Hohlkörper zum Stellglied und/oder über den Hohlkörper wieder weg vom Stellglied. Das heißt über einen bzw. zwei in Wirkverbindung stehende Kühlwasserkanäle des Hohlkörpers, wobei das Stellglied in vorteilhafter Weise zwischen den beiden Kühlwasserkanälen angeordnet ist. Hiermit wird der entsprechende Kühlkreislauf des Motors oder des Fahrzeugs, wie eines Pkw's oder Lkw's, durch die Motorzuluftverteilereinheit hin zum Stellglied und/oder von diesem wieder durch die Motorzuluftverteilereinheit weiter geführt. Entsprechend wird eine vollständige Integration der Kühlung des Stellglieds mit dem erfindungsgemäßen Hohlkörper realisierbar.

In einer besonderen Weiterbildung der Erfindung weist der Hohlkörper bzw. das Gehäuse wenigstens eine Abgaszuströmöffnung und vorzugsweise eine Abgasabströmöffnung zur Zuführung und insbesondere zur Abströmung von Abgas des Motors auf und ist wenigstens ein Abgas-Regelelement, insbesondere ein Abgas-Rückführventil, zur Kontrolle der Abgasdurchströmung und/oder der Abgasdurchströmmenge bzw. einer Abgasrückführung vorgesehen. Hiermit kann eine vorteilhafte Abgasrückführung von Abgas des Motors über den Hohlkörper bzw. die Verteilereinheit wieder in die Zylinder bzw. in den Motor realisiert werden.

Vorteilhafterweise weist der Hohlkörper wenigstens einen Abgas-Kühlwasserzulauf und einen Abgas-Kühlwasserablauf zum Zuführen und Abführen von Kühlwasser auf, so dass das Abgasregelelement mit Kühlwasser kühlbar ist. In einer vorteilhaften Variante der Erfindung ist der Hohlkörper bzw. das Gehäuse/die Gehäusewand wenigstens teilweise als Abgas-Kühlwasserkanal, insbesondere als Abgas-Regelelement-Kühlwasserkanal bzw. Abgas-Rückführventil-Kühlwasserkanal, für das Kühlwasser ausgebildet, wobei zumindest teilweise der Abgas-Kühlwasserkanal im Wesentlichen entlang einer Ober-/Außenfläche des Hohlkörpers/Gehäuses bzw. der Gehäusewand ausgerichtet ist.

Vorzugsweise erstreckt sich ein entsprechender Abgas-Kühlwasserkanal nicht (nur) quer zur Wand durch die Gehäusewand bzw. den Hohlkörper hindurch, sondern erstreckt sich vielmehr zum Großteil bzw. im Wesentlichen entlang des Hohlkörpers bzw. der Wand des Hohlkörpers/Gehäusewand, d.h. längs zur Außen-/Oberfläche des Hohlkörpers bzw. der Gehäusewand, insbesondere parallel zur Außenfläche.

So wird in vorteilhafter Weise erreicht, dass die Motorzuluftverteilereinheit nicht nur zur Durchströmung bzw. Verteilung von Zuluft ausgebildet ist, sondern vielmehr zusätzlich auch noch zur Durchströmung und ggf. in vorteilhafter Weise zur Verteilung von Kühlwasser zur Kühlung von Abgas bzw. entsprechender Abgas-Elemente in wenigstens einem separaten Kühlwasser-Hohlraum, der sich im Hohlkörper/Gehäuse zusätzlich zum bzw. neben einem Zuluft-Hohlraum für die Zuluft befindet. Dementsprechend kann die Wand des Hohlkörpers bzw. die Gehäusewand des sogenannten "Saugrohrs" als Abgas-Kühlwasserkanal ausgebildet bzw. verwendet werden. Demgemäß ist der Abgas-Kühlwasserkanal als in den Hohlkörper eingeformter Kühlwasserkanal realisiert.

Der Abgas-Kühlwasserkanal der Motorzuluftverteilereinheit erstreckt sich im Wesentlichen zwischen dem Abgas-Kühlwasserzulauf und dem Abgas-Kühlwasserablauf und kann sich beispielsweise in nicht geradliniger Weise entlang der (gebogenen) Gehäusewand erstrecken, insbesondere mehrere Zentimeter oder Dezimeter lang.

Mit der Ausbildung des Abgas-Kühlwasserkanals als Abgas-Regelelement-Kühlwasserkanal kann eine separate Verbindung des Regelelementes zum Kühlkreislauf, insbesondere zum sogenannten Hochtemperaturkreislauf mit ca. 90°C entfallen. Das heißt, das Regelelement bzw. die sogenannte "AGR-Ventil" kann gemäß der Erfindung indirekt über den Hohlkörper in den jeweiligen Kühlkreislauf eingebunden werden. Direkte Anschlüsse des Regelelementes an Schläuche des Kühlkreislaufes können in vorteilhafter Weise entfallen. Ein entsprechender Montageaufwand für die Montage derartiger Schläuche sowie der Schlauchschellen als auch die hiermit verbundene Gefahr von Undichtigkeiten entsprechender Schlauchverbindungen wird gemäß der Erfindung vermieden.

Vorzugsweise umfasst der Kühlwasserkanal, insbesondere Abgas-Regelelement-Kühlwasserkanal, eine Trennwand zwischen dem Innenraum des Hohlkörpers bzw. eines Zuluft-Hohlraumes für die Zuluft, wobei die Trennwand eine Wärmetauscherfläche umfasst bzw. als Wärmetauscherwand zum Wärmetausch bzw. zum Kühlen des Abgases mit Hilfe des Kühlwassers des Abgas-Kühlwasserkanals ausgebildet ist. Hiermit kann eine vorteilhafte Kühlung des Abgases innerhalb der Motorzuluftverteilereinheit und gegebenenfalls ohne weitere Wärmetauscher bzw. Kühler realisiert werden.

Schlauch- oder Rohrverbindungen des Regelelementes bzw. AGR-Ventils wie dies bislang beim Stand der Technik realisiert wurde, sind somit nicht mehr notwendig bzw. werden vollständig vermieden, was die Betriebssicherheit und die Herstellung bzw. die Montagekosten etc. reduziert.

Dementsprechend wird das Kühlwasser für das Regelelement nunmehr indirekt dem Regelelement zugeführt, nämlich über den Hohlkörper zum Regelelement und/oder über den Hohlkörper wieder weg vom Regelelement. Hiermit wird der entsprechende Kühlkreislauf des Motors oder des Fahrzeugs, wie eines Pkw's oder Lkw's, durch die Motorzuluftverteilereinheit hin zum Regelelement und/oder von diesem wieder durch die Motorzuluftverteilereinheit weiter geführt. Entsprechend wird eine vollständige Integration der Kühlung des Regelelementes mit dem erfindungsgemäßen Hohlkörper realisierbar.

In einer vorteilhaften Variante der Erfindung ist der Hohlkörper bzw. das Gehäuse/die Gehäusewand wenigstens teilweise als Zuluft-Kühlwasserkanal für das Kühlwasser ausgebildet, wobei zumindest teilweise der Zuluft-Kühlwasserkanal im Wesentlichen entlang einer Ober-/ Außenfläche des Hohlkörpers/Gehäuses bzw. der Gehäusewand ausgerichtet ist.

Vorzugsweise erstreckt sich ein entsprechender Kühlwasserkanal für die Zuluft-Kühleinheit, insbesondere für den Ladeluftkühler, nicht (nur) quer zur Wand durch die Gehäusewand bzw. den Hohlkörper hindurch, sondern erstreckt sich vielmehr zum Großteil bzw. im Wesentlichen entlang des Hohlkörpers bzw. der Wand des Hohlkörpers/Gehäusewand, d.h. längs zur Außen-/Oberfläche des Hohlkörpers bzw. der Gehäusewand, insbesondere parallel zur Außenfläche.

So wird in vorteilhafter Weise erreicht, dass die Motorzuluftverteilereinheit nicht nur zur Durchströmung bzw. Verteilung von Zuluft ausgebildet ist, sondern vielmehr zusätzlich auch noch zur Durchströmung und ggf. in vorteilhafter Weise zur Verteilung von Kühlwasser für die Zuluft-Kühleinheit bzw. den Ladeluftkühler, der sich im Hohlkörper/Gehäuse zusätzlich befindet bzw. innerhalb des Zuluft-Hohlraums für die Zuluft angeordnet ist. Dementsprechend kann die Wand des Hohlkörpers bzw. die Gehäusewand des sogenannten "Saugrohrs" als Kühlwasserkanal für die Zuluft-Kühleinheit bzw. den Ladeluftkühler ausgebildet bzw. verwendet werden.

Der erfindungsgemäße Kühlwasserkanal der Motorzuluftverteilereinheit erstreckt sich im Wesentlichen zwischen dem entsprechenden Kühlwasserzulauf und dem Kühlwasserablauf und kann sich beispielsweise in nicht geradliniger Weise entlang der (gebogenen) Gehäusewand erstrecken, insbesondere mehrere Zentimeter oder Dezimeter lang.

Mit der Ausbildung des Kühlwasserkanals als Kühlwasserkanal für die Zuluft-Kühleinheit bzw. den Ladeluftkühler kann eine separate Verbindung der Zuluft-Kühleinheit bzw. des Ladeluftkühlers zum Kühlkreislauf, insbesondere zum sogenannten Nidertemperaturkreislauf mit ca. 40°C entfallen. Das heißt, das die Zuluft-Kühleinheit bzw. der Ladeluftkühler kann gemäß der Erfindung indirekt über den Hohlkörper in den jeweiligen Kühlkreislauf eingebunden wird. Direkte Anschlüsse des Stellglieds an Schläuche des Kühlkreislaufes können in vorteilhafter Weise entfallen. Ein entsprechender Montageaufwand für die Montage derartiger Schläuche sowie der Schlauchschellen als auch die hiermit verbundene Gefahr von Undichtigkeiten entsprechender Schlauchverbindungen wird gemäß der Erfindung vermieden.

Schlauch- oder Rohrverbindungen des Stellglieds wie dies bislang beim Stand der Technik realisiert wurde, sind bei dieser vorteilhaften Ausführungsform der Erfindung somit nicht mehr notwendig bzw. werden vollständig vermieden, was die Betriebssicherheit und die Herstellung bzw. die Montagekosten etc. reduziert.

In einer besonderen Variante der der Erfindung weist der Hohlkörper bzw. das/die Gehäuse/Gehäusewand wenigstens je eine Kühlwasserzuströmöffnung und eine Kühlwasserabströmöffnung für das Kühlwasser der Zuluft-Kühleinheit bzw. des Ladeluftkühlers auf. Hiermit wird ermöglicht, dass das Kühlwasser über je eine Kühlwasserzuströmöffnung der Zuluft-Kühleinheit und eine Kühlwasserabströmöffnung der Zuluft-Kühleinheit zu/in die Zuluft-Kühleinheit vom Hohlkörper einströmen und wieder aus der Zuluft-Kühleinheit in den Hohlkörper ausströmen kann.

Folglich kann hiermit erreicht werden, dass durch die Montage der Zuluft-Kühleinheit am/in Hohlkörper bzw. dem Gehäuse die Zuluft-Kühleinheit in den entsprechend vorteilhaften Kühlkreislauf integriert bzw. eingebunden wird. Entsprechend kann die Schnittstelle der Kühlung der Zuluft-Kühleinheit zum Kühlkreislauf über den Hohlkörper bzw. einen vorteilhaften Anschluss-/Montage-Flansch, vorzugsweise mit einem vorteilhaften Dichtelement, realisiert werden.

Vorteilhafterweise kann das Kühlwasser für die Zuluft-Kühleinheit bzw. den Ladeluftkühler nunmehr indirekt der Zuluft-Kühleinheit bzw. dem Ladeluftkühler zugeführt werden, nämlich über den Hohlkörper zur Zuluft-Kühleinheit bzw. zum Ladeluftkühler und/oder über den Hohlkörper wieder weg von der Zuluft-Kühleinheit bzw. vom Ladeluftkühler. Das heißt über einen bzw. zwei in Wirkverbindung stehende Kühlwasserkanäle des Hohlkörpers, wobei die Zuluft-Kühleinheit bzw. der Ladeluftkühler in vorteilhafter Weise zwischen den beiden Kühlwasserkanälen angeordnet ist. Hiermit wird der entsprechende Kühlkreislauf des Motors oder des Fahrzeugs, wie eines Pkw's oder Lkw's, durch die Motorzuluftverteilereinheit hin zur Zuluft-Kühleinheit bzw. zum Ladeluftkühler und/oder von dieser/diesem wieder durch die Motorzuluftverteilereinheit weiter geführt. Entsprechend wird eine vollständige Integration der Kühlung der Zuluft-Kühleinheit bzw. des Ladeluftkühlers mit dem erfindungsgemäßen Hohlkörper realisierbar.

In einer besonderen Weiterbildung der Erfindung umfasst eine ebene Hohlkörperfläche des Hohlkörpers wenigstens die Zuluft-Auströmöffnungen und wenigstens einen der Kühlwasserzuläufe und/oder wenigstens einen der Kühlwasserabläufe und/oder die Abgaszuströmöffnung. Hiermit wird gewährleistet, dass die ebene Hohlkörperfläche in vorteilhafter Weise abdichtbar ist und/oder als Schnittstelle für den Motor bzw. einen Zylinderkopf des Motors ausgebildet ist. So kann in vorteilhafter Weise mit einer flächigen bzw. ebenen Dichtung bzw. einer Flachdichtung nicht nur die Zuluft-Ausströmöffnungen der Verteilereinheit gemäß der Erfindung abdichten, sondern zugleich eine weitere Betriebsmedium-Übergabe abdichten, wie zum Beispiel eine Kühlwasseröffnung (Zulauf oder Ablauf) und/oder der Abgaszuströmöffnung. Gerade die Übergabe von Kühlwasser des sogenannten "Hochtemperatur-Kühlmittelkreislaufes" vom bzw. zum Zylinderkopf/Motor und die Übergabe von Abgas vom Zylinderkopf ermöglicht eine multifunktionale Verwendung der Schnittstelle bzw. der ebenen Hohlkörperfläche gemäß der Erfindung. So wird hiermit mit der Montage der Motorzuluftverteilereinheit am Motor bzw. am sogenannten "Zylinderkopf" des Motors beispielsweise mittels mehrerer Schraubelemente, und einer vorteilhaften Flachdichtung oder dergleichen in einem Vorgang die Abdichtung mehrerer Übergabestellen, das heißt der Zuluft für den Motor, dass Abgas vom Motor sowie Kühlwasser vom bzw. zum Motor, realisiert. Dementsprechend verringert sich der Montageaufwand als auch die Herstellung zum Teil mehrerer separater Wegenleitungen wie dies beim Stand der Technik bislang üblich war.

Durch die vorteilhafte ebene Hohlkörperfläche bzw. Schnittstelle des Hohlkörpers zum Motor bzw. zum Zylinderkopf des Motors wird darüber hinaus eine lange Lebensdauer bzw. eine deutliche Reduzierung bzw. vollständige Vermeidung von Undichtigkeiten entsprechender Schlauchverbindungen bzw. Rohrverbindungen wie dies beim Stand der Technik bislang zum Teil realisiert wurde.

Gemäß der Erfindung wird somit die Motorzuluftverteilereinheit vollständig in den Kühlwasserkreislauf bzw. in die separaten Kühlwasserkreisläufe realisierbar. Eine derartige hohe Indikation des sogenannten "Saugrohrs" bzw. der Verteilereinheit gemäß der Erfindung in die unterschiedlichsten Komponenten moderner Verbrennungskraftmaschinen bzw. Motoren produziert zum einen den Montageaufwand und somit auch die Kosten und zum anderen wird hierdurch die Gefahr von Undichtigkeiten aufgrund von Schlauchverbindungen bzw. Rohrverbindungen, wie dies beim Stand der Technik bislang vorhanden war, deutlich verbessert.

Durch die Integration des Stellglieds bzw. der sogenannten "Regelklappe" als auch des Abgasregelelementes bzw. des sogenannten "Abgasrückführventils" (AGR-Ventil) und/oder des sogenannten Ladeluftkühlers (LLK) bzw. der Zuluftkühleinheit wird einer Optimierung der bei modernen Motoren verwendeten Komponenten realisiert. Separate bzw. direkte Einbindungen dieser Komponenten in den bzw. die Kühlkreisläufe entsprechender moderner Motoren können entfallen. Vielmehr wird gemäß der Erfindung die Kühlung mit Hilfe der Motorzuluftverteilereinheit bzw. des Hohlkörpers/Gehäuses, das heißt über die Ausbildung des Hohlkörpers als Kühlwasserkanal und/oder Wärmetauscherwand realisiert.

Durch die Ausrüstung von Brennkraftmaschinen mit Aufladegeräten bzw. Verdichtern zum Verdichten bzw. Aufladen der Ansaugluft, insbesondere mit sog. Abgasturboladern oder dergleichen, ist es möglich, eine höhere Leistung der Brennkraftmaschine zu generieren und/oder wenigstens einen Teil der im Abgas vorhandenen Verlustenergie zurückzugewinnen und der Brennkraftmaschine wieder zuzuführen. Hierfür sind bereits unterschiedlichste Systeme bekannt.

Zum Beispiel werden Ladersysteme betrieben, wobei zum einen die Luft für den Verbrennungsmotor über einen Luftfilter zu einem Abgasladegerät und von diesem zu einem Ladeluftkühler und schließlich zum Verbrennungsmotor geleitet wird. Das Ladegerät wird durch eine Abgasturbine angetrieben, wodurch die angesaugte Luft/Zuluft entsprechend verdichtet wird. Durch die Verdichtung erhöht sich die Temperatur der Luft/Zuluft für den Verbrennungsmotor, was zu einer Verringerung des Wirkungsgrades des Verbrennungsmotors führen würde. Aus diesem Grund wird diese Temperaturerhöhung durch den sog. Ladeluftkühler wenigstens teilweise ausgeglichen bzw. vollständig kompensiert.

Ein Ladeluftkühler (Abk.: LLK, englisch intercooler) ist im Allgemeinen ein Wärmeübertrager, der im Ansaugtrakt eines aufgeladenen Verbrennungsmotors die Temperatur der dem Motor zugeführten Verbrennungsluft verringert. Der Ladeluftkühler wird im Ansaugtrakt zwischen dem Verdichter (Verdichterrad eines Turboladers oder Kompressors) und dem Einlassventil des Motors/Zylinders eingebaut und führt einen Teil der Wärme ab, die durch die Verdichtung der Luft im Turbolader entsteht.

Ziel ist hierbei die Erhöhung von Leistung und Wirkungsgrad des Motors. Durch die Verringerung der Temperatur der zugeführten Luft ist im gleichen Volumen eine größere Luftmasse enthalten, dadurch kann proportional mehr Kraftstoff verbrannt werden. Der Ladeluftkühler erhöht somit die mögliche Abgabeleistung.

Ladeluftkühler spielen nicht nur bei starken Motoren und im Renneinsatz eine Rolle, sondern auch beim Downsizing von Motoren, da die Ladeluftkühlung bei kleineren Motoren mehr Leistung und geringeren Verbrauch ermöglicht. Insbesondere bei Dieselmotoren sind Ladeluftkühler praktisch unverzichtbar, da mit Saugmotoren und aufgeladenen Motoren ohne Kühlung die heute üblichen Verbrauchswerte nicht erreicht und die vorgeschriebenen Abgasgrenzwerte nicht eingehalten werden können.

So weisen die Ladeluftkühler mit den oben genannten Komponenten, AGR-Ventil, etc. zahlreiche Leitungen für die Zufuhr und die Abfuhr von Kühlmittel (KM) bzw. Kühlwasser, Ladeluft, Abgas auf. Hierbei wird vor allem Kühlmittel (KM) sowohl dem Ladeluftkühler als solchem als auch den weiten wärme- bzw. hitzeempfindlichen Komponenten wie dem AGR-Ventil, der Regelklappe, zur Weiterleitung zum/vom Zylinderkopf etc. zugeführt. Dies ist notwendig, da das Abgas bzw. die aufgeladene, d.h. mit Druck beaufschlagte Luft für den Verbrennungsmotor/-raum zum Teil mehrere hundert Grad Celsius aufweist, z.B. ca. 230°C heiße Ladeluft, ca. 450°C heißes Abgas. Dies wurde bislang im Allgemeinen mit entsprechenden Kunststoffschläuchen und Rohrschellen-Verbindungen realisiert, was aufwändig, störungsanfällig bzw. leckageanfällig, kostenintensiv ist und Platz bzw. Bauraum beansprucht. Gemäß der Erfindung sind nun diese separaten Schläuche und/oder Leitungen/Rohre zum Teil bzw. nahezu vollständig entbehrlich.

Der Ladeluftkühler wird nämlich einerseits von der aufgeladenen heißen Ladeluft und andererseits vom Kühlmittel, insb. Kühlwasser, durchströmt und ist in einem Gehäuse angeordnet, das entsprechende Stutzen für die Kunststoffschläuche aufweist. Das Gehäuse wird im Fahrzeugbau allgemein als sogenanntes "Saugrohr" bezeichnet, da hiermit im Ansaugtakt des Verbrennungsmotors die benötigte Luft "angesaugt" wird, was jedoch bei entspr. "aufgeladenen" Motoren mit Überdruck der Ladeluft und nicht mit dem hiermit vermeintlich implizit unterstellten "Unterdruck" erfolgt.

Vorzugsweise weist der Hohlkörper bzw. das Gehäuse bzw. die Gehäusewand des Hohlkörpers wenigstens teilweise eine Wärmetauscherfläche für die Zuluft bzw. das (verdichtete) Betriebsgas bzw. die Ladeluft und/oder für das Kühlwasser/Kühlmittel und/oder für das Abgas auf und/oder ist der Hohlkörper bzw. das Gehäuse bzw. die Gehäusewand wenigstens teilweise als zwischen zwei der Öffnungen durchgehender Strömungskanal für die Zuluft bzw. das verdichtete Betriebsgas bzw. die Ladeluft und/oder für das Kühlmittel und/oder für das Abgas ausgebildet.

Generell ist im Sinn der Erfindung ein Kanal bzw. ein Strömungskanal sowohl ein (vollständig) geschlossener Kanal, d.h. ein geschlossenes Rohr bzw. Wasser- und oder Luftkanal (mit beliebigem Querschnitt und Längsausdehnung) als auch eine (halb-) offene Rinne bzw. offener "Wasserkanal" für das Strömungsmedium, d.h. Gas oder Flüssigkeit. Hierbei ist die offene Rinne des Gehäuses in vorteilhafter Weise mit einem Deckelelement bzw. Verschlusselement zu verschließen. Vorteilhafterweise ist die als offene Rinne des Hohlkörpers/Gehäuses/Gehäusewand ausgebildeter erfindungsgemäße Strömungskanal mit einer zweiten Rinne bzw. einem Abdeckelement zu einem geschlossenen Strömungskanal auszubilden. Gegebenenfalls kann die zweite Rinne bzw. das Abdeckelement mit dem Gehäuse bzw. dem Strömungskanal, d.h. der ersten Rinne, stoffschlüssig verbunden, z.B. verschweißt, verlötet etc., oder mittels eines Dichtelements abgedichtet und fixiert, z.B. verklebt, verschraubt etc. werden. Somit wird auch hiermit ein (vollständig) geschlossener Kanal, d.h. ein geschlossenes Rohr bzw. Wasser-/Luftkanal (mit beliebigem Querschnitt und Längsausdehnung) realisiert.

Dementsprechend wird gemäß der Erfindung das Kühlmittel und/oder die Ladeluft bzw. das verdichtete Betriebsgas und/oder das Abgas durch den Hohlkörper bzw. das Gehäuse hindurchgeleitet oder zumindest an diesem Gehäuse entlang geleitet.

Vorzugsweise ist der Hohlkörper bzw. die Gehäusewand als Wärmetauscherelement mit einer Wärmetauscherfläche für das Kühlmittel und/oder die Zuluft/Ladeluft bzw. das verdichtete Betriebsgas und/oder das Abgas ausgebildet. Das heißt, dass Wärme durch den Hohlkörper bzw. die Gehäusewand zum Kühlen bzw. Erwärmen der besagten Medien verwendet wird.

Dies ist eine völlige Abkehr gegenüber dem bisherigen Stand der Technik, wobei mit vom Gehäuse beabstandeten Kunststoffschläuchen die besagten Medien weitergeleitet wurden. Ein Wärmetausch mit dem Gehäuse sollte/konnte somit aufgrund des Abstandes und des verwendeten Kunststoffes für die Schläuche nicht realisiert werden.

So verbessert sich die Energieeffizienz bzw. das Energiemanagement, da gemäß der Erfindung nachteilige Wärmeverluste vermindert und die Wärmeübertragung über den/das bevorzugt metallischen Hohlkörper bzw. Gehäuse verbessert wird.

Vorteilhafterweise ist gemäß der Erfindung eine Integration der Zu-/Ableitungen der Betriebsmedien, d.h. Zuluft/Luft und/oder Kühlmittel/-wasser und/oder Abgas realisiert, was zu einer sehr kompakten, störungs-/leckageunempfindlichen und kostengünstigen Baueinheit bzw. Bauweise sowie Fertigung führt.

Vorteilhafterweise wird eine Flächenkühlung für eine am Hohlkörper bzw. Gehäuse angeordnete Komponente, insb. für das sogenannte AGR-Ventil oder dergleichen, und/oder der Hohlkörper bzw. das Gehäuse weist eine als Kühlfläche ausgebildete Kontaktfläche für eine Komponente der Aufladevorrichtung, insb. des sog. AGR-Ventils auf. Hiermit kann im Gegensatz zum Stand der Technik auf eine direkte Kühlung bzw. eine Zuführung von Kühlmittel zu dieser Komponente, insb. dem sog. AGR-Ventil, verzichtet werden. Die Kühlung dieser Komponente der Aufladevorrichtung erfolgt bei der vorteilhaften Variante der Erfindung mittels Wärmetaucher-Fläche bzw. Kühlfläche des (gekühlten bzw. von Kühlmittel durchströmten) Hohlkörpers/Gehäuses.

### Ausführungsbeispiel

Ein Ausführungsbeispiel der Erfindung ist in der Zeichnung dargestellt und wird anhand der Figuren näher erläutert.

Im Einzelnen zeigt:
- Figur 1: ein schematisches Blockschaltbild eines Motors mit Verteilereinheit gemäß der Erfindung und zwei Kühlkreisläufen,
- Figur 2: ein schematisches Schnittbild durch eine Verteilereinheit gemäß der Erfindung mit Luft- und Abströmung,
- Figur 3: eine perspektivische Darstellung der Verteilereinheit gemäß Figur 2 mit Drosselklappe und AGR-Ventil,
- Figur 4: eine weitere perspektivische Darstellung der Verteilereinheit gemäß Figur 2 mit Ladeluftkühler,
- Figur 5: eine perspektivische, zum Teil geschnittene Darstellung der Verteilereinheit gemäß Figur 2,
- Figur 6: eine Schnittdarstellung der Verteilereinheit gemäß Figur 2 mit Zylinderkopf und
- Figur 7: eine vergrößerte Schnittdarstellung eines Ausschnitts der Verteilereinheit gemäß Figur 2 mit Kühlwasserkanal.

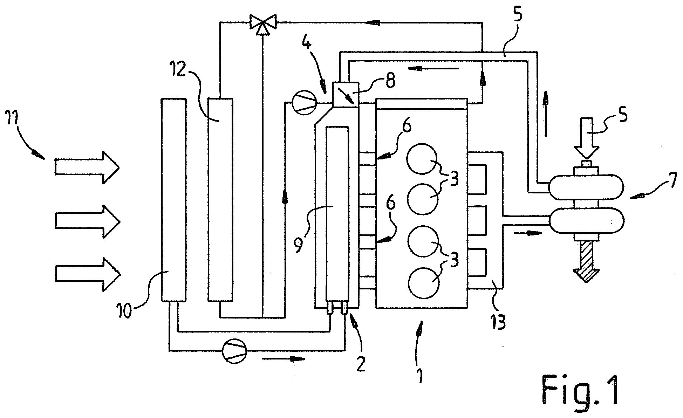

In Figur 1 ist ein schematisches Blockschaltbild eines Motors 1 mit einer Verteilereinheit 2 bzw. einem sogenannten "Saugrohr" 2 dargestellt. Beispielhaft sind vier Zylinder 3 des Motors 1 dargestellt, die jeweils mit dem Saugrohr 2 verbunden sind. Über eine Einströmöffnung 4 des Saugrohres 2 strömt einströmende Luft 5 in das Saugrohr 2 hinein sowie durch das Saugrohres 2 hindurch und wird über entsprechende Abströmöffnungen 6 verteilt zu den (vier) Zylindern 3 des Motors 1. Das heißt, das Saugrohr 2 ist zum Verteilen der Luft 5 auf jeden einzelnen Zylinder 6 ausgebildet.

Zum Saugrohr 2 strömt die Luft 5 vorzugsweise von einem Verdichter 7 unter Druck bzw. verdichtet und über eine Regelklappe 8 in das Saugrohr 2 verdichtet hinein.

In Figur 1 ist zudem im Saugrohr 4 ein sogenannter Ladeluftkühler 9 zur Kühlung der aufgrund der Verdichtung erwärmten Luft 5 vorgesehen. Dieser Ladeluftkühler 9 ist an einen Niedertemperaturkühlkreis mit einem Kühler 10 verbunden. Dieser Kühler 10 umfasst als Kühlmedium Kühlwasser, das im Betrieb vorzugsweise ca. 40°C kalt ist und durch den Ladeluftkühler 9 hindurchströmt und die hierbei aufgenommene Wärme durch die Luftströmung des Fahrtwindes 11 an die Atmosphäre abgibt.

Darüber hinaus ist ein zweiter Kühler 12 vorgesehen, der ebenfalls als Kühlmedium Kühlwasser aufweist, jedoch ein höheres Temperaturniveau als der Kühler 10 aufweist. Das Kühlwasser des Kühlers 12 ist ca. 90°C warm und ist unter anderem zur Kühlung der Regelklappe 8 sowie zu wenigstens einem Teil des Motorblocks des Motors 1 vorgesehen. Dementsprechend strömt das Kühlwasser des Kühlers 12 durch die Regelklappe 8 und durch den Motor 1 hindurch und wird hierbei erwärmt. Die aufgenommene Wärme wird wiederum an die Atmosphäre bzw. die Umgebungsluft mit Hilfe des Kühlers 12 abgegeben.

Darüber hinaus ist in Figur 1 auch die Abgasströmung schematisch dargestellt, wobei das Abgas des Motors 1 über einen Abgaskrümmer 13 dem Verdichter 7 bzw. Turbolader 7 oder dergleichen zuströmt und durch die Strömungsgeschwindigkeit den Verdichter bzw. ein erstes Verdichterrad antreibt, wobei über ein zweites Verdichterrad die Luft 5 als Zuluft für den Motor 1 entsprechend verdichtet bzw. auflädt.

Lediglich aus Gründen der Übersichtlichkeit wird auf die Darstellung bzw. nähere Beschreibung z.B. einer Entlüftung des Saugrohres sowie von vorteilhaften Sensoren wie Temperatursensoren, Gassensoren, elektrischen Anschlussleitungen oder dergleichen verzichtet.

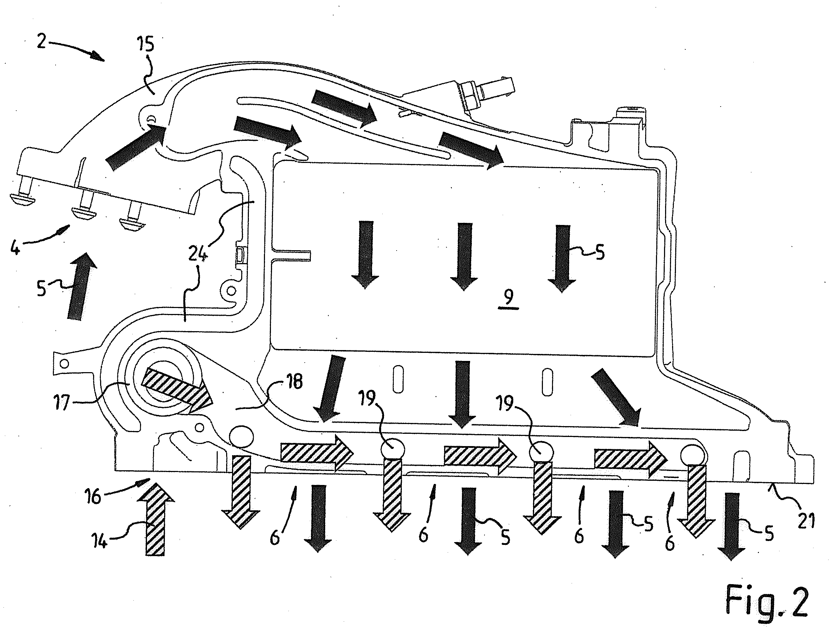

In Figur 2 ist schematisch und im Schnitt ein vorteilhaftes Saugrohr 2 gemäß der Erfindung dargestellt, wobei die Strömung der Luft 5 durch/innerhalb eines ersten Hohlraumes sowie die Strömung des Abgases 14 in bzw. durch das Saugrohr 2 hindurch schematisch mit entsprechenden Pfeilen veranschaulicht ist. Hierbei wird deutlich, dass durch die Zuströmöffnung 4 Luft 5, das heißt vorzugsweise verdichtende Luft 5, in das Saugrohr 2 bzw. den Hohlkörper 15 bzw. das Gehäuse 15 einströmt und innerhalb des ersten Hohlraumes bzw. des Gehäuses/Hohlkörpers 15 durch den Ladeluftkühler 9 hindurch strömt und aus den mehreren Ausströmöffnungen 6 ausströmt und zu den in Figur 2 nicht näher dargestellten Zylindern 3 des Motors 1 strömt.

Darüber hinaus ist auch die Abgasströmung (schraffierte Pfeile) schematisch dargestellt, wobei deutlich wird, dass eine Öffnung 16 für einströmendes Abgas 14 das Gehäuse 15 aufweist und über einen Ventilsitz 17 eines nicht näher dargestellten Abgasrückführventils in das Saugrohr 2 bzw. das Gehäuse 15 bzw. den ersten (gemeinsamen/verbundenen) Hohlraum einströmt und über einen Abgaskanal 18 und entsprechenden Abgasauströmöffnungen 19 aus dem Kanal 18 ausströmt und mit der Luft 5 vermischt wird und gemeinsam zu den nicht näher dargestellten Zylindern 3 strömt.

Teilweise ist ein Kühlwasserkanal 24 gemäß der Erfindung ebenfalls in Figur 2 dargestellt, wobei dieser Kühlwasserkanal 24 einen separaten/abgetrennten bzw. zweiten Hohlraum des Gehäuses/Hohlkörpers 15 bildet.

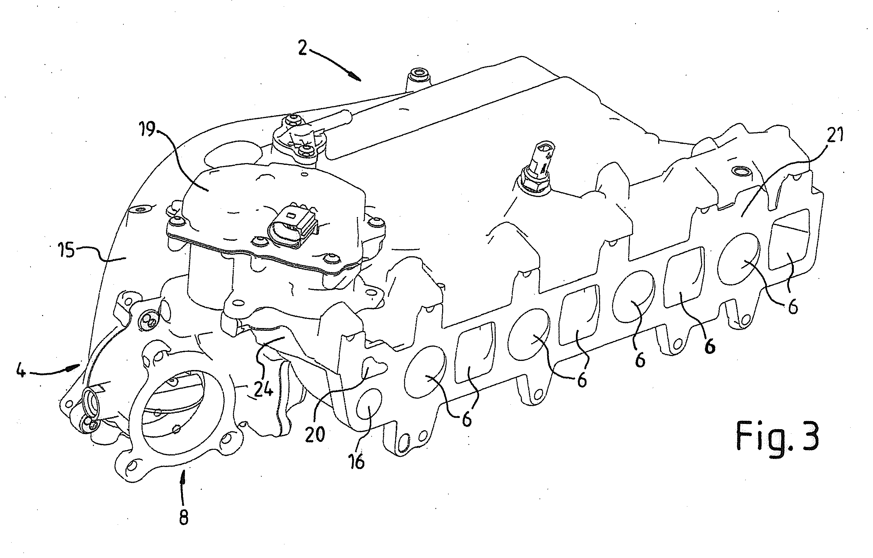

In Figur 3 ist das Saugrohr 2 gemäß Figur 2 perspektivisch dargestellt, wobei jedoch die Regelklappe 8 am Gehäuse 15 fixiert bzw. angeschraubt/montiert ist. Zudem ist ein AGR-Ventil 19 bzw. ein Abgasrückführventil 19 am Gehäuse 15 bzw. dem Hohlkörper 15 montiert bzw. festgeschraubt.

Figur 3 veranschaulicht zudem die Abgaszuströmöffnung 16 des Gehäuses 15 als auch eine Kühlwasseröffnung 20 des Gehäuses 15 zur Zufuhr bzw. Abfuhr von Kühlwasser, insbesondere des sogenannten Hochtemperaturkreislaufes. Vorzugsweise ist die Kühlwasseröffnung 20 als Zuströmöffnung für Kühlwasser des Hochtemperaturkreislaufs ausgebildet, wodurch Kühlwasser aus einem Zylinderkopf des Motors 1 dem Saugrohr 2 übergeben bzw. zugeführt wird.

Vor allem in Figur 3 wird deutlich, dass eine ebene bzw. planare Fläche 21 des Saugrohrs 2 bzw. des Gehäuses 15 nicht nur die Ausströmöffnungen 6 für die Zuluft zum Zylinderkopf bzw. dem Motor 1, sondern darüber hinaus zugleich auch eine Zuströmöffnung 16 für Abgas der Abgasrückführung als auch eine Kühlwasseröffnung 20 des Kühlkreislaufes in vorteilhafter Weise umfasst. So wird deutlich, dass durch eine Montage des Saugrohrs 2 bzw. des Gehäuses 15 beispielsweise mit Hilfe von mehreren Schrauben oder dergleichen, am Zylinderkopf bzw. am Motor 1 und vorzugsweise mit Hilfe einer Dichtung bzw. einer Flachdichtung oder dergleichen die Fläche 21 als Schnittstelle des Saugrohrs zum Motor 1 ausgebildet ist und zugleich in vorteilhafter Weise mehrere Betriebsmedien gegeneinander abdichtet bzw. voneinander wirkungsvoll abtrennt und mit dem Motor 1 dauerhaft verbindbar sind.

Bei einer derart vorteilhaften ebenen bzw. planaren Fläche 21 kann eine dauerhafte Abdichtung der mehreren, separaten Kanälen bzw. Öffnungen der Betriebsmedien ohne nennenswerte Gefahr einer Leckage auch über längere Zeiträume gewährleistet werden. Eine aufwendige und einzelne Montage von Schlauchverbindungen oder Rohrverbindungen für die separaten/unterschiedlichen Betriebsmedien/-fluide kann entfallen.

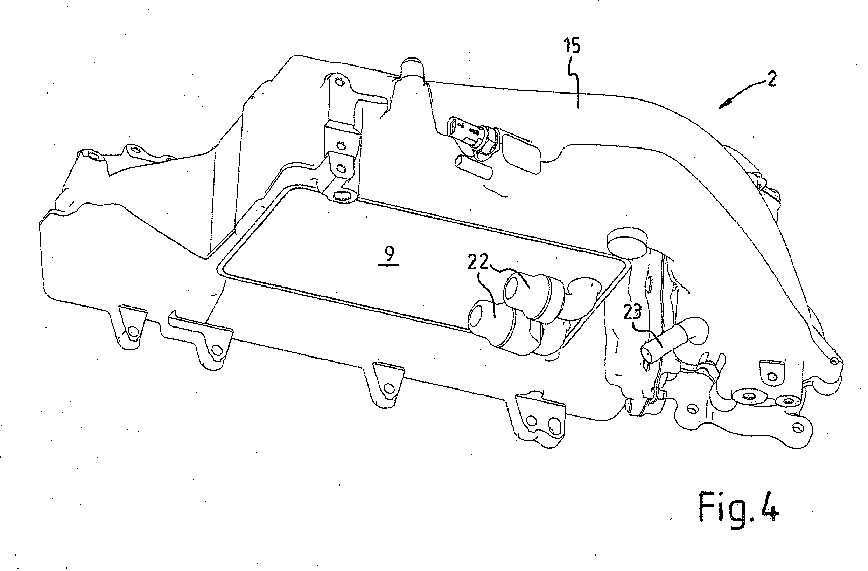

Figur 4 zeigt eine weitere perspektivische Darstellung des Saugrohrs 2, wobei zwei Anschlüsse 22 für Kühlwasser des sogenannten Niedertemperaturkühlkreislaufs erkennbar sind. Die zwei Anschlüsse 22 führen einerseits zum Kühler 10 bzw. kommen vom Kühler 10 gemäß dem Blockschaltbild der Figur 1. Beispielsweise wird ein Ladeluftkühler 9 separat hergestellt, einschließlich der Anschlüsse 22 und in das Gehäuse 15 des Saugrohrs 2 eingebracht und diese dann fest miteinander verbunden, insbesondere miteinander verschweißt. Beispielsweise besteht das Gehäuse 15 aus Aluminium(-guss) und der Ladeluftkühler 9 (ebenfalls) aus Aluminium(-blech). Hierbei kann beispielsweise mittels einer Aluminiumschweißnaht eine dichte und dauerhafte Verbindung bzw. eine geschlossene Gehäuseoberfläche/Hülle des Saugrohres 2 bzw. Hohlkörpers 15 realisiert werden.

Darüber hinaus wird in Figur 4 eine Anschlussleitung 23 bzw. eine Öffnung 23 für Kühlwasser, vorzugsweise des Hochtemperaturkühlkreislaufs, anschaulich dargestellt. So strömt Kühlwasser über einen Kühlkanal 24, der beispielsweise in Figur 2 veranschaulicht ist, von einer Eintrittsöffnung 16 des Gehäuses 15 am bzw. im Bereich des Ventilsitzes 17 (innerhalb der Wand des Gehäuses 15 bzw. mittels einer Wärmetauscherwand getrennt) vorbei, bis hin zur Luft-Zuströmöffnung 4, an dem die Regelklappe 8 im Betrieb fest fixiert und abgedichtet ist.

Im Bereich der Zuströmöffnung 4 des Gehäuses 15 des Saugrohrs 2 mündet im dargestellten Ausführungsbeispiel der Kanal 24 an einer Öffnung 25. Diese Öffnung 25 ist an einer ebenen Flanschfläche 26 zur Fixierung der Regelklappe 8 angeordnet. Die Regelklappe 8 umfasst ein Gehäuse 28, das (ohne nähere Darstellung) einen internen Kühlwasserkanal aufweist. Dieser Kühlwasserkanal der Regelklappe 8 nimmt Kühlwasser von der Öffnung 25 auf und gibt dies wieder an eine Öffnung 27 des Hohlkörpers 15 ab. Zum Beispiel strömt das Kühlwasser vorteilhafterweise in Umfangsrichtung um die Öffnung 4 bzw. den Luftdurchströmkanal der Regelklappe 8 herum und über die Öffnung 27 wieder aus dem Gehäuse der Regelklappe 8 in das Gehäuse 15 des Saugrohrs 2 und über den Anschluss bzw. die Leitung 23 aus dem Saugrohr 2 bzw. dem Gehäuse 15 hinaus.

Die Anschlussleitung 23 ist in vorteilhafter Weise mit dem Hochtemperaturkühler 12 gemäß Figur 1 z.B. über Schlauchleitungen oder dergleichen verbunden, so dass der entsprechende Kühlkreislauf über den Motor 1 und der Anschlussleitung 3 das Saugrohr 2 sowie den Motorblock als integrale Bestandteile umfasst. Weitere Anschlussschläuche wie dies bislang beim Stand der Technik üblich war, das heißt separate Anschlüsse des Abgasrückführventils 19 und der Regelklappe 8 etc. sind gemäß der vorliegenden Erfindung entbehrlich. So kann gemäß der Erfindung auch Bauraum bzw. Platz eingespart/reduziert werden.

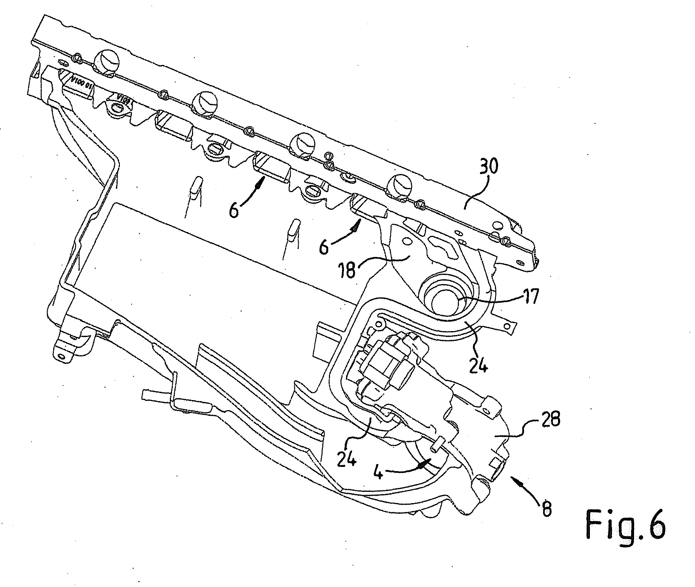

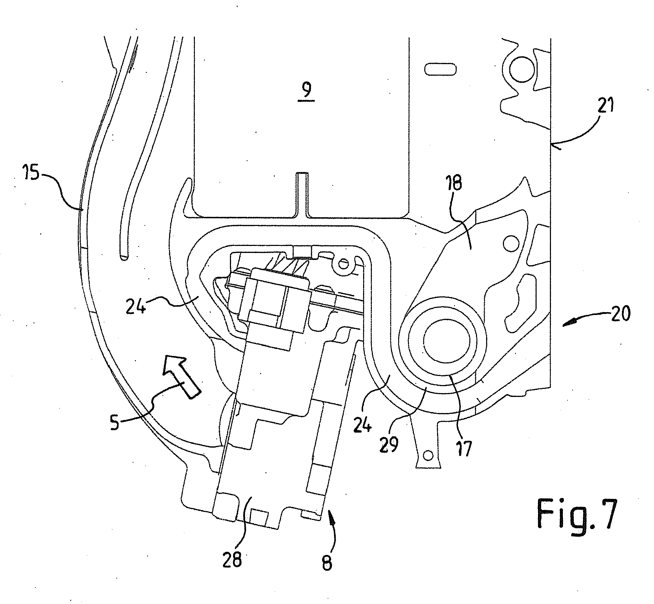

Vor allem in Figur 7 wird deutlich, dass der Kühlkanal 24 mit dem Ventilsitz 17 über eine Trennwand 29 verbunden ist. Die Trennwand 29 ist in vorteilhafter Weise als Wärmetauscherwand 29 ausgebildet, so dass das Kühlwasser des Kühlkanals 24 zur Kühlung des Ventilsitzes 17 ausgebildet ist und somit das sogenannte AGR-Ventil 19 kühlt. Eine separate Kühlung des AGR-Ventils 19 bzw. ein separater Kühlmantel des AGR-Ventils 19 kann entfallen.

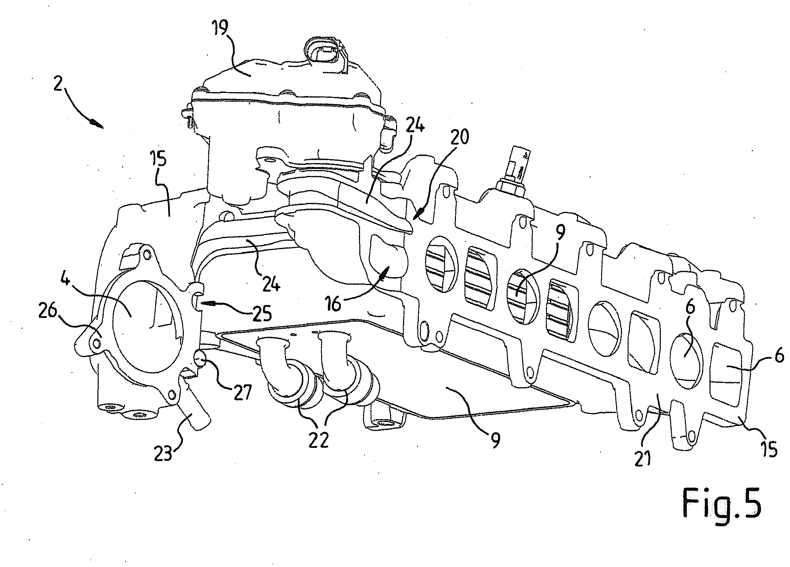

In Figur 5 ist der Bereich der Öffnung 16 bzw. der Öffnung 20 und zudem auch der Kühlkanal 24 in teilweise geschnittener Darstellung abgebildet, so dass u.a. der Verlauf des geschlungenen Weges des Kühlkanals 24 (im Wesentlichen parallel entlang der (gebogenen bzw. dreidimensional ausgebildeten) Außen-/Oberfläche des Gehäuses 15 bzw. Hohlkörpers 2) besser verdeutlicht werden soll.
Lediglich in Figur 6 ist ein Zylinderkopf 30 des Motors 1 teilweise abgebildet. Hierbei wird veranschaulicht, dass der Zylinderkopf 30 exakt vier Öffnungen 6 für die entsprechenden vier Zylinder 3 des Motors 1 aufweist, wogegen bei der Ausführungsvariante des abgebildeten Saugrohres 2 dieses sogar jeweils zwei Ausströmöffnungen 6 (einmal rund und einmal quasi viereckig) pro Zylinder 3 des Motors 1 aufweist, so dass das abgebildete Saugrohr 2 gemäß den Figuren 2 bis 7 sogar insgesamt acht Ausströmöffnungen 6 zur Verteilung der Zuluft 5 zu den jeweils/tatsächlich vorhandenen (vier) Zylinder 3 des Motors 1 aufweist.
Generell ist im Sinn der Erfindung als eine/die vorteilhafte Funktion der Verteiler-Einheit ein Aufteilen (und mittels der Regelklappe 8 vorzugsweise ein Regeln) der Zuluftströmung zu den jeweils vorhandenen Zylindern 3 des Motors 1 zu verstehen.

In einer nicht erfindungsgemäßen Ausführung kann der Hohlkörper 15 bzw. das sog. "Saugrohr" 2 derart ausgebildet werden, dass dieses eine einzige Zuluft-Zuströmöffnung 4 und eine einzige Zuluft-Ausströmöffnung 6 aufweist und ein am sog. "Saugrohr" zu montierendes/fixierendes Verteilerelement bzw. der sog. "Zylinderkopf" 30 wenigstens zwei bzw. mehrere Ausströmöffnungen 6 für zu den Zylindern 3 ausströmende Zuluft 5 umfasst. Auch mit Hilfe dieser vorteilhaften Einheit aus sog. "Saugrohr" bzw. Hohlkörper 15 und einem separat handhabbaren Verteilerelement 30 bzw. dem sog. "Zylinderkopf" 30 wird die Motorzuluft-Verteiler-Einheit realisiert.
Aus den Figuren wird darüber hinaus veranschaulicht, dass das vom Zylinderkopf 30 vorzugsweise einströmendes Kühlwasser über die Öffnung 20 nicht nur das AGR-Ventil 19 bzw. den Ventilsitz 17 über den Kühlkanal 24 kühlt, sondern auch in Strömungsrichtung dem AGR-Ventil 19 nachfolgend die Regelklappe 8 bzw. das Gehäuse 28 der Regelklappe 28 durchströmt und dieses kühlt und schließlich aus dem Gehäuse 15 über die Leitung 23 mit dem Kühlkreislauf verbunden wird. Ohne nähere Darstellung kann in einer weiteren
nicht erfindungsgemäßen Ausführung durchaus auch der Ladeluftkühler 9 über derart im Hohlkörper 15 integrierte Kühlkanäle gekühlt bzw. durchströmt werden. Das heißt, dass im Gegensatz zur dargestellten Ausführungsform beispielsweise das Gehäuse 15 separate Kühlkanäle aufweist, die an einer ersten Stelle dem geformten Gehäuse 15 bzw. dem Saugrohr 2 zugeführt und über die Wand des Gehäuses 15 zum Ladeluftkühler 9 zugeleitet wird, diesen durchströmt bzw. die Luft 5 kühlt und beispielsweise über die Wand des Gehäuses 15 an einer zweiten Stelle aus dem Gehäuse 15 bzw. dem Saugrohr 2 hinaus strömt.
Im dargestellten Ausführungsbeispiel ist der Kühlkanal 24 in das gegossene Gehäuse 15, insbesondere aus Aluminiumguss hergestellt, eingegossen. Generell kann auch ein Kühlkanal 24 bzw. weitere Kühlkanäle in der Weise hergestellt werden, dass diese beim Gussvorgang als Halbschalen- bzw. offene Kanäle realisiert werden und anschließend mittels einer zweiten "Halbschale" bzw. einer Abdeckung werden geschlossene Kanäle hergestellt, beispielsweise durch eine Schweißverbindung, Lötverbindung oder dergleichen. Die Verwendung von geschlossenen, gegossenen Kanälen wie der dargestellte Kühlwasserkanal 24 gewährleistet eine weitest gehende Dichtigkeit auch über viele Jahre hinweg.

### Bezugszeichenliste

- 1: Motor
- 2: Saugrohr
- 3: Zylinder
- 4: Öffnung
- 5: Luft
- 6: Öffnung
- 7: Verdichter
- 8: Regelklappe
- 9: Ladeluftkühler
- 10: Kühler
- 11: Fahrtwind
- 12: Kühler
- 13: Krümmer
- 14: Abgas
- 15: Gehäuse
- 16: Öffnung
- 17: Ventilsitz
- 18: Kanal
- 19: AGR-Ventil
- 20: Öffnung
- 21: Fläche
- 22: Anschluss
- 23: Leitung
- 24: Kanal
- 25: Öffnung
- 26: Flansch
- 27: Öffnung
- 28: Gehäuse
- 29: Wand
- 30: Zylinderkopf

## Patentansprüche

1. Motorzuluft-Verteilereinheit (2) zum Verteilen von Zuluft (5) auf wenigstens zwei Zylinder (3) eines Motors (1), wobei ein geformter Hohlkörper (15) zur Luftleitung und Luftverteilung wenigstens eine Zuluft-Zuströmöffnung (4) für einströmende Zuluft (5) und wenigstens zwei Zuluft-Ausströmöffnungen (6) für zu den Zylindern (3) ausströmende Zuluft (5) umfasst, wobei an der Zuluft-Zuströmöffnung (4) des Hohlkörpers (15) ein Stellglied (8) zur Kontrolle der Durchströmung und/oder der Durchströmmenge der Zuluft (5) angeordnet ist, wobei wenigstens ein Ladeluftkühler (9) zum Kühlen der Zuluft (5) vorgesehen ist und wobei der Hohlkörper (15) wenigstens einen Zuluft-Kühlzulauf (20, 22, 23) und einen Zuluft-Kühlablauf (20, 22, 23) zum Zuführen und Abführen von Kühlwasser zum Ladeluftkühler (9) aufweist, so dass der Ladeluftkühler (9) mit Kühlwasser kühlbar ist, **dadurch gekennzeichnet, dass** in dem Hohlkörper (15) wenigstens ein Kühlwasser-Zulauf (20, 23) und ein Kühlwasser-Ablauf (20, 23) zum Zuführen und Abführen von Kühlwasser zu/von einer Stellgliedkühlung (24, 25, 27) vorgesehen sind.

2. Verteilereinheit (2) nach Anspruch 1, **dadurch gekennzeichnet, dass** der Hohlkörper (15) wenigstens teilweise als Stellglied-Kühlwasser-Kanal (24) für das Kühlwasser ausgebildet ist, wobei zumindest teilweise der Stellglied-Kühlwasser-Kanal (24) im Wesentlichen entlang einer Außenfläche des Hohlkörpers (15) ausgerichtet ist.

3. Verteilereinheit (2) nach Anspruch 2, **dadurch gekennzeichnet, dass** der Stellglied-Kühlwasser-Kanal (24) wenigstens teilweise an der Zuluft-Zuströmöffnung (4) angeordnet ist.

4. Verteilereinheit (2) nach einem der vorgenannten Ansprüche, **dadurch gekennzeichnet, dass** der Hohlkörper (15) wenigstens eine Abgas-Zuströmöffnung (16) zur Zuführung von Abgas des Motors (1) aufweist und dass wenigstens ein Abgas-Regelelement (19) zur Kontrolle der Abgas-Durchströmung und/oder der Abgas-Durchströmmenge vorgesehen ist.

5. Verteilereinheit (2) nach Anspruch 4, **dadurch gekennzeichnet, dass** der Hohlkörper (15) wenigstens einen Abgas-Kühlwasser-Zulauf (20, 23) und einen Abgas-Kühlwasser-Ablauf (20, 23) zum Zuführen und Abführen von Kühlwasser aufweist, so dass das Abgas-Regelelement (19) mit Kühlwasser kühlbar ist.

6. Verteilereinheit (2) nach einem der vorgenannten Ansprüche, **dadurch gekennzeichnet, dass** der Hohlkörper (15) wenigstens teilweise als Abgas-Kühlwasser-Kanal (24) für das Kühlwasser ausgebildet ist, wobei zumindest teilweise der Abgas-Kühlwasser-Kanal (24) im Wesentlichen entlang einer Außenfläche des Hohlkörpers (15) ausgerichtet ist.

7. Verteilereinheit (2) nach einem der vorgenannten Ansprüche, **dadurch gekennzeichnet, dass** der Hohlkörper (15) wenigstens teilweise als Zuluft-Kühlwasser-Kanal (24) für das Kühlwasser ausgebildet ist, wobei zumindest teilweise der Zuluft-Kühlwasser-Kanal (24) im Wesentlichen entlang einer Außenfläche des Hohlkörpers (15) ausgerichtet ist.

8. Verteilereinheit (2) nach einem der vorgenannten Ansprüche, **dadurch gekennzeichnet, dass** eine ebene Hohlkörperfläche (21) des Hohlkörpers (15) wenigstens die Zuluft-Ausströmöffnungen (6) und wenigstens einen der Kühlwasser-Zuläufe (20) und/oder wenigstens einen der Kühlwasser-Abläufe (20) und/oder die Abgas-Zuströmöffnung (16) umfasst.

9. Fahrzeug, insbesondere Landfahrzeug, und/oder Verbrennungskraftmaschine/Motor (1) mit einer Verteilereinheit (2) nach einem der vorgenannten Ansprüche.

## Claims

1. A motor inlet air distributor unit (2) for distributing inlet air (5) to at least two cylinders (3) of a motor (1), wherein a moulded hollow body (15) for conducting and distributing air comprises at least one inlet air inflow opening (4) for inflowing inlet air (5) and at least two inlet air outflow openings (6) for outflow of inlet air (5) to the cylinders (3), wherein an actuator (8) for controlling the throughflow and/or throughflow rate of the inlet air (5) is arranged at the inlet air inflow opening (4) of the hollow body (15), wherein at least one charge air cooler (9) for cooling the inlet air (5) is provided, and wherein the hollow body (15) comprises at least one inlet air cooling supply line (20, 22, 23) and one inlet air cooling discharge line (20, 22, 23) for supplying and discharging cooling water to the charge air cooler (9), such that the charge air cooler (9) can be cooled with cooling water, **characterised in that** at least one cooling water supply line (20, 23) and one cooling water discharge line (20, 23) is provided in the hollow body (15) in order to supply and discharge cooling water to/from an actuator cooling (24, 25, 27).

2. The distributor unit (2) according to claim 1, **characterised in that** the hollow body (15) is formed at least partially as an actuator cooling water channel (24) for the cooling water, wherein the actuator cooling water channel (24) is substantially orientated, at least in part, along an outer surface of the hollow body (15).

3. The distributor unit (2) according to claim 2, **characterised in that** the actuator cooling water-channel (24) is arranged, at least in part, at the inlet air-inlet flow opening (4).

4. The distributor unit (2) according to any one of the preceding claims, **characterised in that** the hollow body (15) comprises at least one exhaust gas inlet flow opening (16) for supplying exhaust gas of the motor (1) and **in that** at least one exhaust gas regulating element (19) is provided for controlling the exhaust gas throughflow and/or the exhaust gas throughflow rate.

5. The distributor unit (2) according to claim 4, **characterised in that** the hollow body (15) comprises at least one exhaust gas cooling water supply line (20, 23) and one exhaust gas cooling water discharge line (20, 23) for supplying and discharging cooling water, so that the exhaust gas regulating element (19) can be cooled with cooling water.

6. The distributor unit (2) according to any one of the preceding claims, **characterised in that** the hollow body (15) is formed at least partially as an exhaust gas cooling water channel (24) for the cooling water, wherein the exhaust gas cooling water channel (24) is substantially orientated, at least in part, along an outer surface of the hollow body (15).

7. The distributor unit (2) according to any one of the preceding claims, **characterised in that** the hollow body (15) is formed at least partially as an inlet air cooling water channel (24) for the cooling water, wherein the inlet air cooling water channel (24) is substantially orientated, at least in part, along an outer surface of the hollow body (15).

8. The distributor unit (2) according to any one of the preceding claims, **characterised in that** a flat hollow body surface (21) of the hollow body (15) comprises at least the inlet air outflow opening (6) and at least one of the cooling water supply lines (20) and/or at least one of the cooling water discharge lines (20) and/or the exhaust gas inlet flow opening (16).

9. Vehicle, in particular a land vehicle, and/or an internal combustion engine/motor (1) comprising a distributor unit (2) according to any one of the preceding claims.

## Revendications

1. Unité de répartition d'air frais de moteur (2) pour la répartition d'air frais (5) sur au moins deux cylindres (3) d'un moteur (1), un corps creux moulé (15) comprenant pour la conduction de l'air et la répartition de l'air au moins une ouverture d'admission d'air frais (4) pour l'air frais entrant (5) et au moins deux ouvertures d'évacuation d'air frais (6) pour l'air frais (5) sortant vers les cylindres (3), un actionneur (8) étant disposé au niveau de l'ouverture d'admission d'air frais (4) du corps creux (15) pour la régulation de l'écoulement et/ou de la quantité d'écoulement de l'air frais (5), au moins un refroidisseur d'air de suralimentation (9) pour le refroidissement de l'air frais (5) étant prévu et le corps creux (15) présentant au moins une arrivée de refroidissement d'air frais (20, 22, 23) et une évacuation de refroidissement d'air frais (20, 22, 23) pour amener et évacuer l'eau de refroidissement au refroidisseur d'air de suralimentation (9), de sorte que le refroidisseur d'air de suralimentation (9) puisse être refroidi par l'eau de refroidissement, **caractérisée en ce qu'**au moins une arrivée d'eau de refroidissement (20, 23) et une évacuation d'eau de refroidissement (20, 23) sont prévues dans le corps creux (15) pour alimenter et évacuer l'eau de refroidissement à/vers un refroidissement d'actionneur (24, 25, 27).

2. Unité de répartition (2) selon la revendication 1, **caractérisée en ce que** le corps creux (15) est formé au moins partiellement comme un canal d'eau de refroidissement d'actionneur (24) pour l'eau de refroidissement, le canal d'eau de refroidissement d'actionneur (24) étant orienté au moins partiellement essentiellement le long d'une surface externe du corps creux (15).

3. Unité de répartition (2) selon la revendication 2, **caractérisée en ce que** le canal d'eau de refroidissement d'actionneur (24) est disposé au moins partiellement au niveau de l'ouverture d'admission d'air frais (4).

4. Unité de répartition (2) selon une des revendications précédentes, **caractérisée en ce que** le corps creux (15) présente au moins une ouverture d'admission de gaz d'échappement (16) pour l'alimentation en gaz d'échappement du moteur (1) et **en ce qu'**au moins un élément régulateur des gaz d'échappement (19) est prévu pour réguler l'écoulement des gaz d'échappement et/ou la quantité d'écoulement des gaz d'échappement.

5. Unité de répartition (2) selon la revendication 4, **caractérisée en ce que** le corps creux (15) présente au moins une arrivée d'eau de refroidissement des gaz d'échappement (20, 23) et une évacuation d'eau de refroidissement des gaz d'échappement (20, 23) pour alimenter et évacuer l'eau de refroidissement, de sorte que l'élément régulateur des gaz d'échappement (19) puisse être refroidi par l'eau de refroidissement.

6. Unité de répartition (2) selon une des revendications précédentes, **caractérisée en ce que** le corps creux (15) est formé au moins partiellement comme un canal d'eau de refroidissement de gaz d'échappement (24) pour l'eau de refroidissement, le canal d'eau de refroidissement de gaz d'échappement (24) étant orienté au moins partiellement essentiellement le long d'une surface externe du corps creux (15).

7. Unité de répartition (2) selon une des revendications précédentes, **caractérisée en ce que** le corps creux (15) est formé au moins partiellement comme un canal d'eau de refroidissement d'air frais (24) pour l'eau de refroidissement, le canal d'eau de refroidissement d'air frais (24) étant orienté au moins partiellement essentiellement le long d'une surface externe du corps creux (15).

8. Unité de répartition (2) selon une des revendications précédentes, **caractérisée en ce qu'**une surface de corps creux plane (21) du corps creux (15) comprend au moins les ouvertures d'évacuation d'air frais (6) et au moins une des arrivées d'eau de refroidissement (20) et/ou au moins une des évacuations d'eau de refroidissement (20) et/ou l'ouverture d'admission de gaz d'échappement (16).

9. Véhicule, en particulier véhicule terrestre et/ou moteur/moteur à combustion (1) doté d'une unité de répartition (2) selon une des revendications précédentes.
